# EUROPEAN PATENT SPECIFICATION

(11) **EP 2 360 031 B1**
(45) Date of publication and mention of the grant of the patent: **19.09.2012**
(21) Application number: 10001745.8
(22) Date of filing: 20.02.2010
(51) Int. Cl.: B60B 33/06, D06F 39/12

(54) **Roller system**
Walzensystem
Système de rouleaux

(43) Date of publication of application: 24.08.2011
(73) Proprietor: Electrolux Home Products Corporation N.V., 1130 Brussel (BE)
(72) Inventor: Kraus, Wolfgang, 91356 Kirchehrenbach (DE)
(74) Representative: Baumgartl, Gerhard Willi

(56) References cited:
- WO-A2-2007/068665
- GB-A- 610 497
- GB-A- 2 323 276
- US-A- 4 789 121
- US-A- 4 955 569

## Description

The present invention relates to a roller system to be installed at a base of a domestic appliance, such as an oven, a dishwasher or the like, in order to enable a comfortable transport of the appliance, as well as to an appliance comprising such a roller system.

In order to facilitate the transport or the maneuvering of a domestic appliance it is known to provide the base of the appliance with roller systems, in particular at a position close to the back side of the appliance, such that one can tilt the appliance around the roller axis and then easily maneuver the appliance resting on the rollers. Roller of this kind systems basically comprise a housing, which is to be fixed at the base of an appliance, and a roller rotatably attached to the housing. Moreover, they can be provided with a mechanism for adjusting the height position of the roller and thus the alignment of the appliance. In one known height adjustment mechanisms the roller is for example drawn along a plane inclined with respect to the horizontal, whereby the height position of the roller is varied. Accordingly, a height adjustment is possible by moving the roller over the inclined plane and locking the same in place in the desired height-position. One drawback of such a height adjustment mechanism is that it requires a large installation space. Moreover, when positioning such a roller system at a base of an appliance close to its back side, one cannot perform a height adjustment of the rollers from the front side of the appliance. This is of particular disadvantage, when the domestic appliance is to be adjusted in height after being positioned in a kitchenette, where the back side of the appliance and thus the roller system is not accessible.

The UK Patent Application GB 2 323 276 A discloses a height adjuster adapted for attachment to an appliance, e, g. a cooker, for adjusting the height thereof, which is capable of adjustment from a remote position. The height adjuster comprises an angularly-movable support member adapted to turn in use relative to the appliance about a horizontal axis, Adjustment means are provided comprising a rod which extends between the support member and a control member positioned remote from the support member at the front side of the appliance.

Starting from this prior art it is an object of the present invention to provide a roller system of the above mentioned kind having an alternative, simple and inexpensive construction and necessitating only a small installation space, whereas the roller is height-adjustable in a comfortable manner, having a low number of components. It is a further object of the invention to have a force to be applied in order to provide height-adjustment action is low.

In order to solve this object the present invention provides a roller system of the above mentioned kind, said roller system comprising a housing to be fixed at the base, a turning lever pivotingly attached at its one free end to the housing, a roller rotatably attached to the other free end of the turning lever, a tension arm pivotingly attached to the turning lever, and a set screw to be seated at the base and being in thread engagement with a thread provided at the tension arm, wherein the roller system is designed in such a manner that, when installed at the base of a domestic appliance, the actuation of the set screw leads to a pivoting of the turning lever and thus to a height adjustment of the roller, and wherein the rotating axis of the roller also forms the providing axis of the tension arm.

Accordingly an easy structured and inexpensive roller system is provided, which is comfortable to handle with respect to the height adjustment of the roller.

The turning lever and/or the roller is/are preferably at least partially receivable in the housing in order to achieve a roller system necessitating only a few installation space.

According to one aspect of the present invention the set screw is in thread engagement with a speed nut of the tension arm. The provision of such a speed nut leads to a simple and inexpensive design of the tension arm.

Stoppers may be provided for adjusting the maximum and minimum adjustable height of the roller. Accordingly, an excessive pivoting of the roller is prevented.

Preferably the rotating axis of the roller also forms the pivoting axis of the tension arm. This leads to a reduction of the number of components. Moreover, a good leverage effect is insured when performing the height-adjustment of the roller. Accordingly the force to be applied in order to turn the set screw is low.

Preferably, the length of the tension arm is chosen in such a manner that the roller is positionable close to the back side of the appliance and the set screw is positionable close to the front side of the appliance, such that one can actuate the set screw from the front side in order to adjust the height of the roller arranged close to the back side. Accordingly, a height-adjustment of the roller can be comfortably performed even if the appliance is already positioned in a kitchenette, where the back side of the appliance and thus the roller of the roller system is not accessible.

Moreover, the present invention provides a domestic appliance, such as an oven, a dishwasher or the like, comprising at least one roller system of the above mentioned kind.

Preferably, two roller systems are provided at opposite sides of the base of the appliance in such a manner, that the rollers of the roller system are positioned close to the back side of the appliance and the set screws of the roller systems are positioned close to the front side of the appliance, such that one can actuate the set screws from the front side in order to adjust the heights of the respective rollers positioned close to the back side.

Further features and advantages of the present invention will become apparent by means of the following description of an embodiment of a roller system according to the present invention with respect to the accompanying drawing. In the drawing
- Figure 1: is a perspective view of a roller system according to an embodiment of the present invention;
- Figure 2: is a side view of the roller system according to figure 1 in an assembled state showing the roller system in a first position; and
- Figur 3: is a side view similar to figure 2 showing the roller system in a second position.

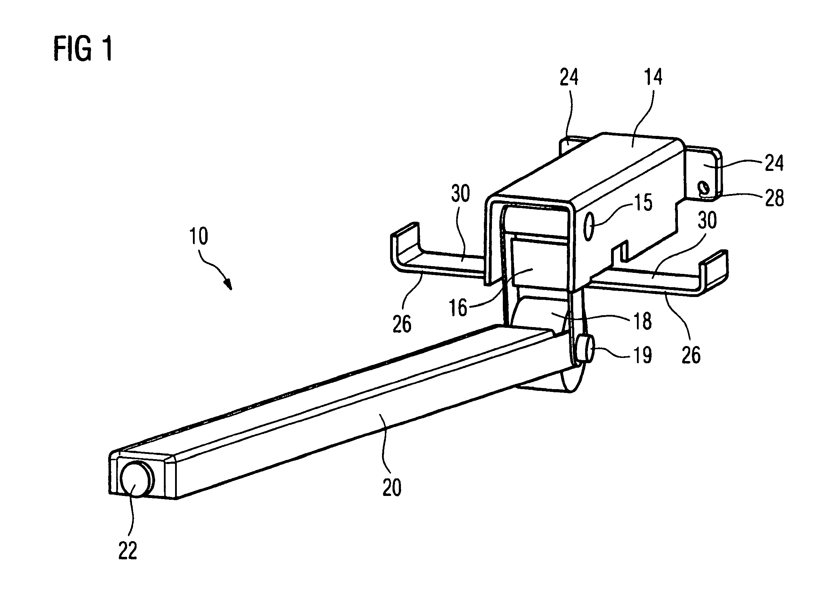

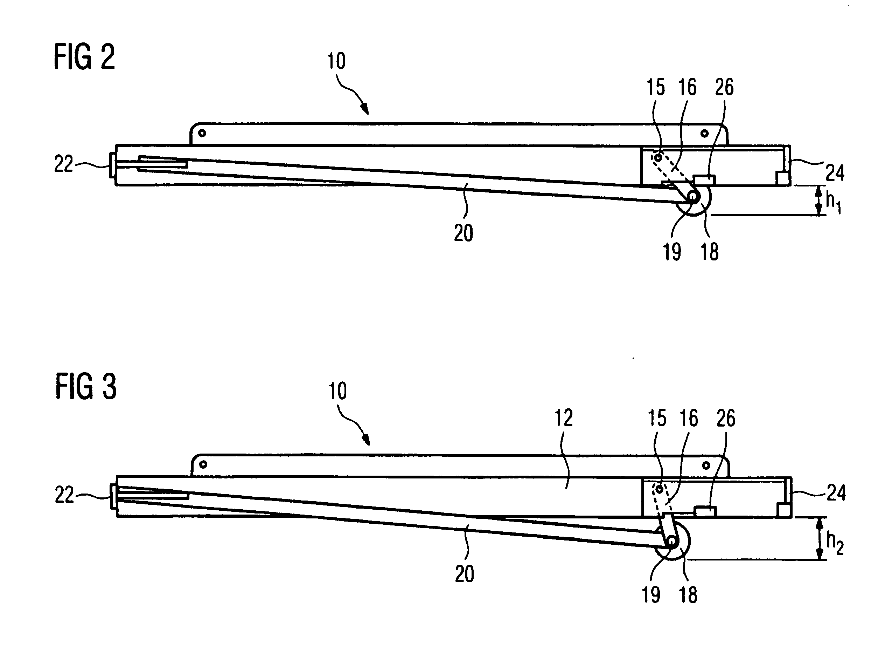

Figures 1 to 3 show a roller system 10 according to an embodiment of the present invention. The roller system 10 is to be installed, as it is shown in figures 2 and 3, at a base 12 of a domestic appliance, such as an oven, a dishwasher or the like, which is not shown in further detail. The roller system 10 comprises a housing 14 to be fixed at the base 12, a turning lever 16, which is attached at its one free end to the housing 14 in such a manner that it is pivotable around a pivoting axis 15, a roller 18, which is attached to the other free end of the turning lever 16 in such a manner that it is rotatable around a rotating axis 19, a tension arm 20 attached to the turning lever 16 and also pivotable around the rotating axis 19, and a set screw 22, which is to be seated at the base 12 and being in threat engagement with the thread of a speed nut (not shown) provided at the free end of the tension arm 20. The pivoting axis 16 and the rotating axis 19 extend parallel to each other.

In order to fix the housing 14 at the base 12 of a domestic appliance, upper flaps 24 and lower flaps 26 are formed integrally with the housing 14, each protruding from the housing 14 and formed with an opening 28, 30 in order to receive a fixing screw. The turning lever 16 and the roller 18 are partially receivable in the housing 14. Thus, the roller system 10 has a small overall height.

In the assembled state, as it is shown in figures 2 and 3, the housing 14 of the roller system 10 is attached to the base 12 of the domestic appliance in a position close to the back side of the appliance. Accordingly, also the roller 18 of the roller system 10 is arranged in the backmost part of the appliance. The length of the tension arm 20 is chosen in such a manner that the set screw 22 on the other hand is seated close to the front side of the appliance such that the set screw 22 is accessible from the front side by a user. The actuation of the set screw 22 leads to a drawing or pushing of the tension arm 20 and thus to a pivoting movement of the turning lever 16 along with the roller 18 attached thereto. Accordingly, the height of the roller 18 can be adjusted, as it is indicated by the heights h₁ and h₂ in figures 2 and 3.

The domestic appliance is provided with two roller systems of the kind shown in figures 1 to 3, which are provided at opposite sides of the base 12 of the appliance. The rollers 18 of the roller systems 10 simplify the transport and maneuvering of the appliance. The above described pivoting mechanism enables a height adjustment of the rollers 18 and thus of the appliance. The appliance may be provided with pedestals at its front side.

### List of reference numerals

- 10: Roller system
- 12: Base
- 14: Housing
- 15: Pivoting axis
- 16: Turning lever
- 18: Roller
- 19: Rotating axis
- 20: Tension arm
- 22: Set screw
- 24: Upper flaps
- 26: Lower flaps

- h₁: Heights
- h₂: Heights

## Claims

1. Roller system (10) to be installed at a base (12) of a domestic appliance, such as an oven, a dishwasher or the like, said roller system (10) comprising
- a housing (14) to be fixed at the base (12);
- a turning lever (16) pivotingly attached at its one free end to the housing (14);
- a roller (18) rotatably attached to the other free end of the turning lever (16);
- a tension arm (20) pivotingly attached to the turning lever (16), and
- a set screw (22) to be seated at the base (12) and being in thread engagement with a thread provided at the tension arm (20),
wherein the roller system (10) is designed in such a manner that, when installed at the base (12) of a domestic appliance, the actuation of the set screw (22) leads to a pivoting of the turning lever (16) and thus to a height adjustment of the roller (18), and wherein the rotating axis (19) of the roller also forms the pivoting axis of the tension arm (20).

2. Roller system (10) according to claim 1, **characterized in that** the turning lever (16) and/or the roller (18) is/are at least partially receivable in the housing (14).

3. Roller system (10) according to one of the foregoing claims, **characterized in that** the set screw (22) is in thread engagement with a speed nut of the tension arm (20).

4. Roller system (10) according to one of the foregoing claims, **characterized in that** stoppers are provided for adjusting the maximum and minimum adjustable height of the roller (18).

5. Roller system (10) according to one of the foregoing claims, **characterized in that** the length of the tension arm (20) is chosen in such a manner that the roller (18) is positionable close to the back side of the appliance and the set screw (22) is positionable close to the front side of the appliance, such that one can actuate the set screw (22) from the front side in order to adjust the height of the roller (18) arranged close to the back side.

6. Domestic appliance, such as an oven, a dishwasher or the like, comprising at least one roller system (10) according to one of the foregoing claims.

7. Domestic appliance according to claim 6, **characterized in that** two roller systems (10) are provided on opposite sides of the base (12) of the appliance in such a manner, that the rollers (18) of the roller systems (10) are positioned close to the back side of the appliance and the set screws (22) of the roller systems (10) are positioned closed to the front side of the appliance, such that one can actuate the set screws (22) from the front side in order to adjust the heights of the respective rollers (18) positioned close to the back side.

## Patentansprüche

1. Rollensystem (10) zur Installation an der Basis (12) eines Haushaltsgeräts, etwa eines Ofens, eines Geschirrspülers oder dergleichen, wobei das Rollensystem (10) umfasst:
- ein Gehäuse (14) zur Befestigung an der Basis (12);
- einen Drehhebel (16), der an seinem einen freien Ende schwenkbar am Gehäuse (14) befestigt ist;
- eine Rolle (18), die drehbar am anderen freien Ende des Drehhebels (16) befestigt ist;
- einen Spannungsarm (20), der schwenkbar am Drehhebel (16) befestigt ist, und
- eine Einstellschraube (22), die an der Basis (12) angesetzt und in Schraubverbindung mit einem am Spannungsarm (20) vorgesehenen Gewinde ist,
wobei das Rollensystem (10) so ausgeführt ist, dass wenn es an der Basis (12) eines Haushaltsgeräts installiert ist, die Betätigung der Einstellschraube (22) zu einer Schwenkbewegung des Drehhebels (16) und damit zu einer Höhenanpassung der Rolle (18) führt, und wobei die Rotationsachse (19) der Rolle auch die Schwenkachse des Spannungsarms (20) bildet.

2. Rollensystem (10) gemäß Anspruch 1, **dadurch gekennzeichnet, dass** der Drehhebel (16) und/oder die Rolle (18) wenigstens teilweise im Gehäuse (14) aufnehmbar ist (sind).

3. Rollensystem (10) gemäß einem der vorangehenden Ansprüche, **dadurch gekennzeichnet, dass** die Einstellschraube (22) in Schraubverbindung mit einer Einsteckmutter des Spannungsarms (20) ist.

4. Rollensystem (10) gemäß einem der vorangehenden Ansprüche, **dadurch gekennzeichnet, dass** Anschlagelemente zum Einstellen der maximal und minimal einstellbaren Höhe der Rolle (18) vorgesehen sind.

5. Rollensystem (10) gemäß einem der vorangehenden Ansprüche, **dadurch gekennzeichnet, dass** die Länge des Spannungsarms (20) so gewählt ist, dass die Rolle (18) nahe an der Rückseite des Geräts und die Einstellschraube (22) nahe der Vorderseite des Geräts positionierbar ist, so dass die Einstellschraube (22) von der Vorderseite betätigt werden kann, um die Höhe der nahe der Rückseite angeordneten Rolle (18) einstellen zu können.

6. Haushaltsgerät, wie beispielsweise ein Ofen, ein Geschirrspüler oder dergleichen, umfassend mindestens ein Rollensystem (10) gemäß einem der vorangehenden Ansprüche.

7. Haushaltsgerät gemäß Anspruch 6, **dadurch gekennzeichnet, dass** zwei Rollensysteme (10) auf gegenüber liegenden Seiten der Basis (12) des Geräts derart bereitgestellt sind, dass die Rollen (18) der Rollensysteme (10) nahe der Rückseite des Geräts positioniert sind und die Einstellschrauben (22) der Rollensysteme (10) nahe der Vorderseite des Geräts positioniert sind, so dass die Einstellschrauben (22) von der Vorderseite betätigt werden können, um die Höhen der entsprechenden Rollen (18), die nahe der Rückseite positioniert sind, einzustellen.

## Revendications

1. Système de rouleaux (10) destiné à être installé au niveau d'une base (12) d'un appareil domestique, tel qu'un four, un lave-vaisselle ou similaire, ledit système de rouleaux (10) comprenant :
un boîtier (14) destiné à être fixé au niveau de la base (12) ;
un levier pivotant (16) fixé de manière pivotante au niveau de son extrémité libre sur le boîtier (14) ;
un rouleau (18) fixé de manière rotative sur l'autre extrémité libre du levier pivotant (16) ;
un bras de tension (20) fixé de manière pivotante au levier pivotant (16), et
une vis de réglage (22) destinée à être installée au niveau de la base (12) et étant en mise en prise de filetage avec un filetage prévu au niveau du bras de tension (20),
dans lequel le système de rouleaux (10) est conçu de sorte que, lorsqu'il est installé à la base (12) d'un appareil domestique, l'actionnement de la vis de réglage (22) conduit à un pivotement du levier pivotant (16) et donc à un ajustement de hauteur du rouleau (18), et dans lequel l'axe de rotation (19) du rouleau forme également l'axe de pivotement du bras de tension (20).

2. Système de rouleaux (10) selon la revendication 1, **caractérisé en ce que** le levier pivotant (16) et/ou le rouleau (18) est/sont au moins partiellement recevable(s) dans le boîtier (14).

3. Système de rouleaux (10) selon l'une quelconque des revendications précédentes, **caractérisé en ce que** la vis de réglage (22) est en mise en prise de filetage avec un écrou rapide du bras de tension (20).

4. Système de rouleaux (10) selon l'une quelconque des revendications précédentes, **caractérisé en ce que** des butées sont prévues pour ajuster la hauteur maximum et minimum ajustable du rouleau (18).

5. Système de rouleaux (10) selon l'une quelconque des revendications précédentes, **caractérisé en ce que** la longueur du bras de tension (20) est choisie de sorte que le rouleau (18) est positionnable à proximité du côté arrière de l'appareil et la vis de réglage (22) peut être positionnée à proximité du côté avant de l'appareil, de sorte que l'on peut actionner la vis de réglage (22) à partir du côté avant afin d'ajuster la hauteur du rouleau (18) agencé à proximité du côté arrière.

6. Appareil domestique, tel qu'un four, un lave-vaisselle ou similaire, comprenant au moins un système de rouleaux (10) selon l'une quelconque des revendications précédentes.

7. Appareil domestique selon la revendication 6, **caractérisé en ce que** deux systèmes de rouleaux (10) sont prévus sur les côtés opposés de la base (12) de l'appareil de sorte que, les rouleaux (18) des systèmes de rouleaux (10) sont positionnés à proximité du côté arrière de l'appareil et les vis de réglage (22) des systèmes de rouleaux (10) sont positionnées à proximité du côté avant de l'appareil, de sorte que l'on peut actionner les vis de réglage (22) à partir du côté avant afin d'ajuster les hauteurs des rouleaux (18) respectifs positionnés à proximité du côté arrière.
